# EUROPÄISCHE PATENTANMELDUNG

(11) **EP 0 730 943 A2**
(43) Veröffentlichungstag der Anmeldung: **11.09.1996**
(21) Anmeldenummer: 96102793.5
(22) Anmeldetag: 24.02.1996
(51) Int. Cl.: B29C 51/14, C08G 18/30

(54) **Mit Klebstoff gebundene Platten oder Formkörper aus Polyurethan-Hartschaumflocken**

(30) Priorität: 08.03.1995 DE 19508080; 05.12.1995 DE 19545288
(71) Anmelder: BAYER AG, 51368 Leverkusen (DE)
(72) Erfinder: Dietrich, Karl Werner, Dr., 51519 Odenthal-Osenau (DE); Sachs, Hanns-Immo, 51379 Leverkusen (DE); Kasperek, Peter, 53804 Much (DE)

(57) **Zusammenfassung**

Die Erfindung betrifft mit Klebstoff gebundene poröse Platten der Rohdichte von 30 - 200 kg/m³, vorzugsweise 50 - 130 kg/m³, aus zerkleinertem Polyurethan-Hartschaum mit einer durchschnittlichen Teilchengröße von mindestens 2 mm und einem Klebstoffgehalt von 3 bis 25 Gew.-%, vorzugsweise 5 bis 12 Gew.-%, ein Verfahren zu deren Herstellung sowie deren Verwendung als Trittschalldämm- und/oder Wärmedämm- oder Schallabsorptions-Materialien. Ebenfalls beschrieben werden entsprechend hergestellte Formkörper sowie ein Verfahren zu deren Herstellung.

## Beschreibung

Es ist bekannt, harte Kunststoffschäume als Trittschalldämm-Materialien zu verwenden. Gegebenenfalls kann die für die Anwendung erforderliche Elastizität auch durch nachträgliches Walken oder Kalandrieren der harten Schaumstoffplatten erzeugt werden. Polyurethan-Hartschaumplatten sind für diese Anwendung in der Regel nicht geeignet, da sie einerseits von Natur aus zu hart und unelastisch sind und andererseits durch Walken oder Kalandrieren in ihrer Struktur zerstört werden.

Es ist weiterhin bekannt, Polyurethan-Hartschaumpulver der Teilchengröße <2 mm unter Zuhilfenahme von Bindemitteln zu Platten zu verpressen. Hierbei werden jedoch nur Platten höherer Rohdichte (>200 kg/m³) erhalten.

Überraschenderweise wurde nun gefunden, daß selbst spröd-harte Polyurethan-Schaumstoffe nach dem Zerkleinem zu Flocken der Teilchengröße 2 bis 20 mm und anschließendem Verpressen zu Platten unter Zuhilfenahme von Bindemitteln zu zäh-elastischen Platten der Rohdichte <200 kg/m³ verarbeitet werden können. Diese Elastizität kann bei einem so hergestellten Werkstoff durch Vorpressen, Walken oder Kalandrieren noch weiter gesteigert werden, ohne die Struktur zu zerstören oder zu beeinträchtigen. Gezielt können so Platten hergestellt werden, welche sich vorzüglich als Trittschalldämm-Materialien unter Estrichen im Hochbau eignen.

Besonderes Interesse haben Schaumflocken-Verbundplatten auch deshalb, weil sie aus Schaumstoffabfällen erzeugt werden können, wie sie bei Recyclieren von alten Kühlgeräten bzw. Polyurethan-Dämmplatten aus Bauschutt oder bei der Bausanierung anfallen. Der Polyurethan-Schaum aus alten Kühlgeräten fällt beim Kühlschrank-Recycling in größerer Menge an, und es ist bisher nicht gelungen, ihn in ausreichendem Umfang einer sinnvollen Anwendung zuzuführen. Dasselbe gilt für Polyurethan-Hartschaum-Abfall aus dem Gebäudeabriß oder der Bausanierung.

Gegenstand der vorliegenden Erfindung sind somit mit Klebstoff gebundene poröse Platten der Rohdichte von 30 bis 200 kg/m³, vorzugsweise 50 bis 130 kg/m³, aus zerkleinertem Polyurethan-Hartschaum mit einer durchschnittlichen Teilchengröße von mindestens 2 mm, vorzugsweise mindestens 5 mm, besonders bevorzugt 5 bis 20 mm, und einem Klebstoffgehalt von 3 bis 25 Gew.-%, vorzugsweise 5 bis 12 Gew.-%.

Erfindungsgemäß bevorzugt sind Platten der dynamischen Steifigkeit von 10 bis 50 MN/m³.

Die Rohdichte der Platten ist mindestens um 25 %, bevorzugt um mindestens 50 %, besonders bevorzugt um mindestens 100 % höher als das Schüttgewicht des eingesetzten zerkleinerten Polyurethan-Hartschaums.

Bevorzugter Klebstoff für den zerkleinerten Polyurethan-Hartschaum, der z.B. in Form von Schaumstoffflocken bzw. Schaumstoffmehl vorliegen kann, sind die an sich bekannten Di- und/oder Polyisocyanate; bevorzugt ist besonders MDI. Oft werden die aus der Polyurethanchemie an sich bekannten Polyole und zur Reaktionsbeschleunigung geeignete PUR-Aktivatoren mitverwendet.

Nach einer bevorzugten Ausführungsform werden die Platten bei einer Temperatur von 20 bis 150°C, vorzugsweise 60 bis 130°C verpreßt.

Vorteilhaft können auch unter Anwendung von Druck größere Blöcke (Dicke >50 mm) aus Schaumstoffflocken und Bindemitteln erzeugt werden, die dann nach Aushärtung des Bindemittels zu dünneren Platten geschnitten werden.

Bevorzugte Quelle für den zerkleinerten Polyurethan-Hartschaum ist das Recycling von Polyurethan-Schaumstoff aus z.B. Polyurethan-Hartschaum-Dämmstoffen aus Bauschutt oder aus recyclierten Kältegeräten. Aber auch Produktionsabfälle oder Baustellen-Verschnitt können so einer sinnvollen Anwendung zugeführt werden. Hierbei können vorteilhaft auch Deckschichtenreste wie Papier, Aluminiumfolie usw. ohne Störung und ohne Eigenschaftsminderung der Platte mitverpreßt werden.

Gegebenenfalls kann der unter Umständen erforderliche Brandschutz z.B. durch Zusatz von Brandschutzsalzen oder organischen Phosphor- und/oder Halogenverbindungen erzeugt werden.

Dies ist jedoch in der Regel nicht erforderlich, wenn Schaumstoff-Abfälle aus dem Baubereich verwendet werden, da diese bereits die erforderliche Brandklassifizierung erreichen. Erfindungsgemäß bevorzugt sind daher Platten, die der Baustoffklasse B1 oder B2 nach DIN 4102, entsprechen.

Obgleich die Teilchengröße mit einem Durchmesser von z.B. 1 cm gegebenenfalls recht groß sein kann, können nach dem erfindungsgemäßen Verfahren Platten mit überraschend hoher Ebendheit hergestellt werden.

Die dynamische Steifigkeit und Elastizität der Platten kann gegebenenfalls auch durch Vorpressen oder nachträgliches Pressen oder Kalandrieren variiert werden. Es zeigte sich ferner, daß optimale Ergebnisse in bezug auf Elastizität der Verbundplatte, dynamische Steifigkeit sowie Rohdichte erzielt werden, wenn Schaumstoffflocken der bevorzugten Teilchengröße von 2 - 20 mm - besonders bevorzugt 5 - 15 mm - verwendet werden.

Ein weiterer Gegenstand der Erfindung ist ein Verfahren zur Herstellung Klebstoff-gebundener poröser Platten mit einer Rohdichte von 30 - 200 kg/m³, bei dem man verkleinerten Polyurethan-Hartschaum mit einer durchschnittlichen Teilchengröße von mindestens 2 mm, vorzugsweise 5 mm, besonders bevorzugt 5 bis 20 mm, mit Klebstoff zu Platten verpreßt, wobei der Klebstoffgehalt 3 bis 25 Gew.-%, vorzugsweise 5 bis 12 Gew.-%, bezogen auf die Platten, beträgt. Dabei ist überraschendend, daß trotz des geringen Klebstoffgehalts sich Platten der angegebenen Rohdichte mit einer guten dynamischen Steifigkeit herstellen lassen.

Ein weiterer Gegenstand der Erfindung ist die Verwendung der vorstehend beschriebenen Platten aus mit Klebstoff gebundenen verkleinerten Polyurethan-Hartschaum als Trittschalldämm- und/oder Wärmedämm-Materialien, z.B. im Hochbau.

Selbstverständlich können die mit Bindemittel versehenen Teilchen auch zur Formkörpern verpreßt werden. Weitere Gegenstände der Erfindung sind daher mit Klebstoff gebundene poröse Formkörper sowie ein Verfahren zu deren Herstellung, bei dem man verkleinerten Polyurethan-Hartschaum, wie vorstehend für die erfindungsgemäßen Platten beschrieben, zu Formköpern verpreßt, wobei der Klebstoffgehalt 3 bis 25 Gew.-%, bezogen auf die Formkörper, beträgt. Solche Formkörper können breiten Einsatz finden, z.B. als Verpackungsstützen oder z.B. in Kältegeräten als wärmedämmende Abtrennung zwischen Kühl- und Gefrierfach.

### Ausführungsbeispiel

Eine bei der Dachsanierung anfallende Polyurethan-Hartschaumdämmplatte wird in einem maschinellen Zerkleinerer (Schredder) zu einer Teilchengröße von ca. 10 mm zermahlen. Hierbei wird der im Schaum enthaltene Chlorfluorkohlenwasserstoff abgetrennt und gesondert entsorgt.

580 g der so erhaltenen Polyurethan-Hartschaumflocken mit einem Schüttgewicht von 30 g/l werden mit 20 g Wasser und 58 g eines Polyisocyanatgemisches von Diphenylmethandiisocyanaten und Polyphenylpolymethylen-polyisocyanaten (Desmodur® VP PU 1520 A20; Bayer AG) mit einem Lödige-Pflugschar-Mischer mit Zweistoffdüsen gleichmäßig vermischt. Aus 220 g dieser Mischung wird in einem Form-Rahmen ein Formling von 400 * 400 mm gebildet, gleichmäßig verdichtet und anschließend in einer Laborpresse unter einem Druck von 5 bar und einer Temperatur von 130°C 8 Minuten unter Verwendung eines Zeit-Meßprogrammes auf 20 mm verpreßt.

Man erhält eine zäh-elastische Platte der Rohdichte 75 kg/m³ mit einer dynamischen Steifigkeit von 39 MN/m³. Die Wärmeleitzahl λ der Platte beträgt bei 10°C Mitteltemperatur 35 mW/mK.

Die Platte läßt sich auf 12 mm zusammenpressen. Nach Entlastung stellt sich eine Dicke von 19,4 mm wieder ein.

## Patentansprüche

1. Mit Klebstoff gebundene poröse Platten der Rohdichte von 30 - 200 kg/m³, vorzugsweise 50 - 130 kg/m³, aus zerkleinertem Polyurethan-Hartschaum mit einer durchschnittlichen Teilchengröße von mindestens 2 mm, vorzugsweise mindestens 5 mm, und einem Klebstoffgehalt von 3 bis 25 Gew.-%, vorzugsweise 5 bis 12 Gew.-%.

2. Platten gemäß Anspruch 1, dadurch gekennzeichnet, daß die Rohdichte der Platten um mindestens 25 %, bevorzugt um mindestens 50 %, besonders bevorzugt um mindestens 100 % höher als das Schüttgewicht des zerkleinerten Polyurethan-Hartschaums ist.

3. Platten gemäß Anspruch 1 bis 2, dadurch gekennzeichnet, daß sie eine dynamische Steifigkeit von 10 - 50 MN/m³ aufweisen.

4. Platten gemäß Ansprüchen 1 bis 3, dadurch gekennzeichnet, daß als Klebstoff Di- und/oder Polyisocyanate verwendet werden.

5. Platten gemäß Anspruch 4, dadurch gekennzeichnet, daß neben den Di- und/oder Polyisocyanaten auch Polyole sowie gegebenenfalls Polyurethan-Aktivatoren mitverwendet werden.

6. Platten gemäß Ansprüchen 1 bis 5, dadurch gekennzeichnet, daß die Platten bei Temperaturen von 20 - 150°C, vorzugsweise 60 - 130°C, verpreßt werden.

7. Platten gemäß Ansprüchen 1 bis 6, dadurch gekennzeichnet, daß Platten der Dicke > 50 mm (Blöcke) gepreßt werden und diese anschließend zu dünneren Platten geschnitten werden.

8. Platten gemaß Ansprüchen 1 bis 7, dadurch gekennzeichnet, daß der zerkleinerte Polyurethan-Hartschaum aus alten, recyclierten Kältegeräten oder aus Dämmplatten gewonnen wird, wie sie beim Gebäudeabriß oder bei der Bausanierung anfallen.

9. Platten gemäß Ansprüchen 1 bis 8, dadurch gekennzeichnet, daß der zerkleinerter Polyurethan-Hartschaum aus Produktionsabfällen oder Baustellen-Verschnitt gewonnen wird.

10. Platten gemäß Ansprüchen 1 bis 9, dadurch gekennzeichnet, daß sie der Baustoffklasse B1 oder B2 nach DIN 4102 entsprechen.

11. Platten gemäß Anspruch 1 bis 10, dadurch gekennzeichnet, daß sie Reste der Deckschichten aus der Doppeltransportbandfertigung mitverpreßt enthalten.

12. Platten gemäß Ansprüchen 1 bis 11, dadurch gekennzeichnet, daß ihre Elastizität durch Kalandrierung oder Vorpressen gesteigert wird.

13. Verwendung der Platten gemäß Ansprüchen 1 bis 12 als Trittschalldämm- und/oder Wärmedämm- und/oder als Schallabsorptions-Materialen.

14. Verfahren zur Herstellung Klebstoff-gebundener poröser Platten der Rohdichte von 30 bis 200 kg/m³, dadurch gekennzeichnet, daß man zerkleinerten Polyurethan-Hartschaum mit einer durchschnittlichen Teilchengröße von mindestens 2 mm mit Klebstoff zu Platten verpreßt, wobei der Klebstoffgehalt 3 bis 25 Gew.-% beträgt.

15. Mit Klebstoff gebundene poröse Formkörper aus verkleinerten Polyurethan-Hartschaum mit einer durchschnittlichen Teilchengröße von mindestens 2 mm, vorzugsweise mindestens 5 mm, und einem Klebstoffgehalt von 3 bis 25 Gew.-%, vorzugsweise 5 bis 12 Gew.-%.

16. Verfahren zur Herstellung Klebstoff-gebundener poröser Formkörper, dadurch gekennzeichnet, daß man verkleinerten Polyurethan-Hartschaum mit einer durchschnittlichen Teilchengröße von mindestens 2 mm zu Formkörpern verpreßt, wobei der Klebstoffgehalt 3 bis 25 Gew.-% beträgt.
